(19) Europäisches Patentamt

European Patent Office

Office européen des brevets

(11) Veröffentlichungsnummer: **0 311 005**
**A2**

## (12) EUROPÄISCHE PATENTANMELDUNG

(21) Anmeldenummer: 88116387.7

(22) Anmeldetag: 04.10.88

(51) Int. Cl.4: **B60S 1/08**

(30) Priorität: 06.10.87 DE 3733762

(43) Veröffentlichungstag der Anmeldung:
**12.04.89 Patentblatt 89/15**

(84) Benannte Vertragsstaaten:
**AT CH DE FR GB IT LI NL SE**

(71) Anmelder: **Karl, Gerhard**
**Hofstrasse 5**
**D-8702 Himmelstadt(DE)**

(72) Erfinder: **Karl, Gerhard**
**Hofstrasse 5**
**D-8702 Himmelstadt(DE)**

(54) Scheibenverschmutzungsmelder.

(57) Beim Messen der Scheibenverschmutzung von Fahrzeugen mit optischen Sensoren im Fahrzeuginnern kann die durch unterschiedliche Verschmutzungsarten wie z.B. Ölfilm zu Fehlmessungen und damit zu Fehlfunktionen der Scheibenwischer kommen. Beim Überqueren der empfindlichen Sensorfläche durch das Hilfe einer Steuerelektronik die Scheibenwischer und Scheibenreinigungsanlage regeln.

EP 0 311 005 A2

## Scheibenverschmutzungsmelder

Die Erfindung betrifft einen Scheibenverschmutzungsmelder mit Auswerteelektronik für Fahrzeuge mit Scheibenreinigungsanlagen, bei denen mittels eines optischen Sensors die Benetzung im Fahrzeuginnern der Scheibe im Wischbereich der Scheibenwischer auf der Außenseite des Fahrzeuges gemessen wird.

Mit einem Sensor wie er in der Patentanmeldung P23 54 100 beschrieben ist, wird das von einer Lichtquelle kommende über prismatische Vorrichtungen an einen Fotoempfänger gelangende total reflektierte Licht gemessen. Je nach Verschmutzungsgrad der Scheibe wird das in den Fotoempfänger gelangende Licht geschwächt.

Haftet auf der Scheibe z.B. ein leichter Ölfilm durch von der Straße hochspritzendes, verschmutztes Wasser oder von Öldämpfen aus dem Motorraum, so wird auch schon bei geringer Benetzung der Scheibe mit Wasser das empfangene Licht so stark geschwächt, daß die derzeitige elektronische Steuerungen den Scheibenwischer einschalten, aber trotz Wischvorgang nicht mehr abschalten können. Weiterhin kann der Regelvorgang auch durch Insekten auf der Scheibe gestört werden.

Der Erfindung liegt nun die Aufgabe zugrunde, mit einem elektronischen Verfahren die Art der Scheibenbenetzung festzustellen und mittels einer Vorrichtung den Scheibenwischer bei Öl- oder insektenverschmierter Scheibe zu steuern oder Scheibenreinigungsmittel auf die Scheibe zu spritzen. Dies wird erfindungsgemäß dadurch gelöst, daß das Signal des Fotoempfängers neben der kontinuierlichen Auswertung speziell in dem kurzen Zeitraum ausgewertet wird,in dem das Wischerblatt des Scheibenwischers die empfindliche Fläche des Sensors überquert und das gemessene Signal mit Sollwerten verglichen wird.

Vorteilhafterweise wird durch einen elektronischen Filter das kontinuierliche Signal unterdrückt und nur das impulsförmige Signal gemessen.

In einer weiteren Ausgestaltung wird die Höhe des gemessenen Signals mittels eines Comparators mit einem Sollwert verglichen und bei nichterreichen eines Vergeleichswertes der Scheibenwischer gestopt.

In einer erfindungsgemäßen Ausführung wird die Höhe des kontinuierlich erfaßten Signals und das impulsförmige Signal erfaßt und mittels Comparatoren mit Sollwerten verglichen. Bei hohem kontinuierlichen Signal, was starke Verschmutzung bedeutet und niederem impulsförmigen Signal, was wenig Wasser auf der Scheibe bedeutet, wird bei Überschreitung der Sollwerte der Scheibenwischer weiter betätigt und gleichzeitig Reinigungsmittel auf die Scheibe gespritzt.

Vorteilhafterweise läßt sich das impulsförmige Signal zur Eichung des Sensors verwenden indem bei nichtvorhandenem oder kleinem Impulsignal die Schaltschwelle der Steuerelektronik automatisch angehoben wird, so daß erst ein höheres kontinuierliches Signal zum Einschalten der Scheibenwischer führt.

In einer weiteren Ausgestaltung wird der Sensor mit einem Temperaturfühler versehen, so daß bei Temperaturen unter dem Gefrierpunkt, wenn das impulsförmige Signal wegen festgefrorene Wischerblätter ausbleibt obwohl das kontinuierliche Signal wegen Vereisung der Scheibe sehr hoch liegt, der Scheibenwischer nach kurzer Verzögerungszeit ageschalten wird.

Je nach Art der Benetzung ist das kontinuierliche Signal vor und nach dem Impulssignal unterschiedlich hoch, so daß die Differenz des kontinuierlichen Signals vorteilhafterweise ausgewertet wird und damit der Scheibenwischer und das Auftragen von Scheibenreinigungsmittel gesteuert wird.

Nachfolgend wird die Erfindung anhand der Abbildung näher erläutert.

Fig. 1 Beispiel eines optischen Sensors mit Temperaturfühler

Fig. 2 Darstellung der optischen Verhältnisse beim Überqueren der empfindlichen Sensorfläche durch das Wischerblatt und die dazugehörigen Signale des Fotoempfängers:

    a. viel Wasser auf der Scheibe

    b. wenig Wasser auf der Scheibe mit leichtem Ölfilm

    c. starker Schmutz auf der Scheibe

Fig. 3 Beispiel eines gefilterten Impulssignals.

Es wird darauf hingewiesen, daß in den fogenden Ausführungen aus Gründen der Übersichtlichkeit für die schematische Darstellungsweise einige Vereinfachungen gegenüber den tatsächlichen Verhältnissen gemacht werden, die das Beschreiben und Verstehen der Erfindung erleichtern, die grundsätzliche Wirkungsweise der Erfindung aber nicht beeinträchtigen.

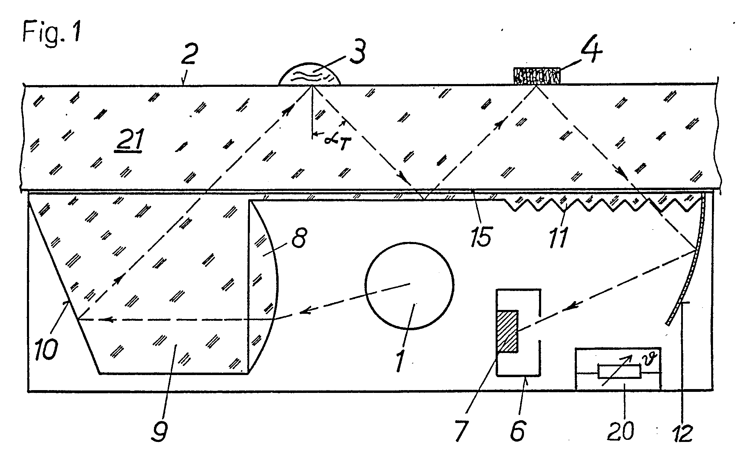

In Fig. 1 ist beispielhaft ein optischer Sensor gezeigt, wie er zum Messen der Scheibenbenetzung eingesetzt werden kann. Vom Lichtsender 1 gelangt das Licht über die primatische Optik 8,9,10 unter dem Winkel der Totalreflektion gegen die benetzte Scheibenoberfläche 2. Nach mehrmaliger Totalreflektion gelangt das Licht über die primatische Optik 11,12 in den Empfänger 7,6. Ist die Scheibe 2 durch Wasser 3 oder Verunreinigung 4 benetzt, wird das Licht geschwächt und die Steuerelektronik schaltet den Wischer ein.

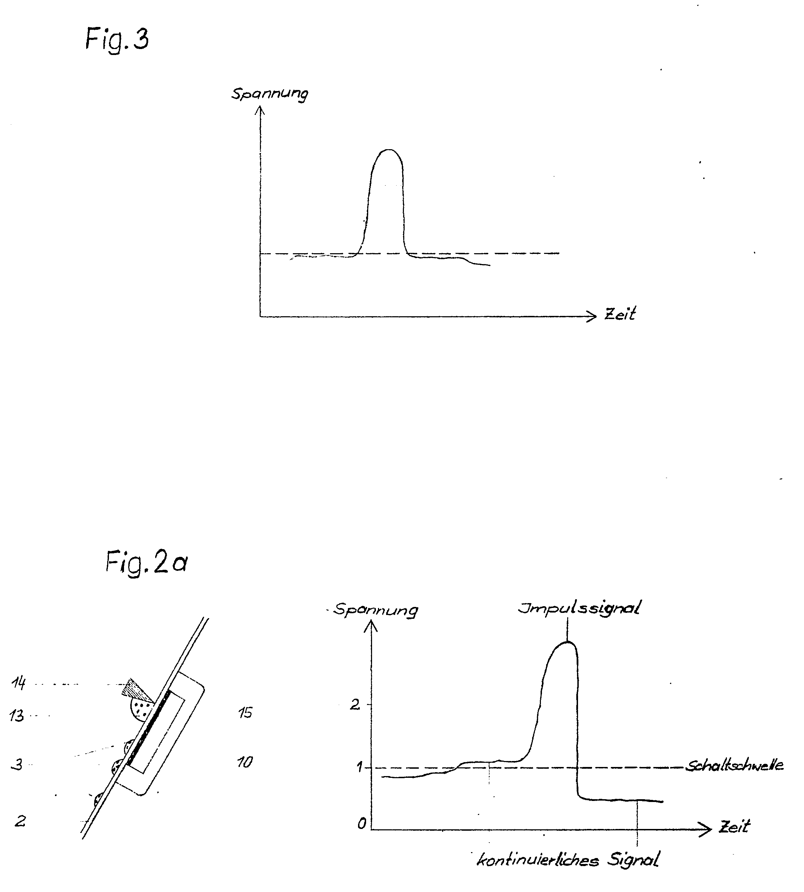

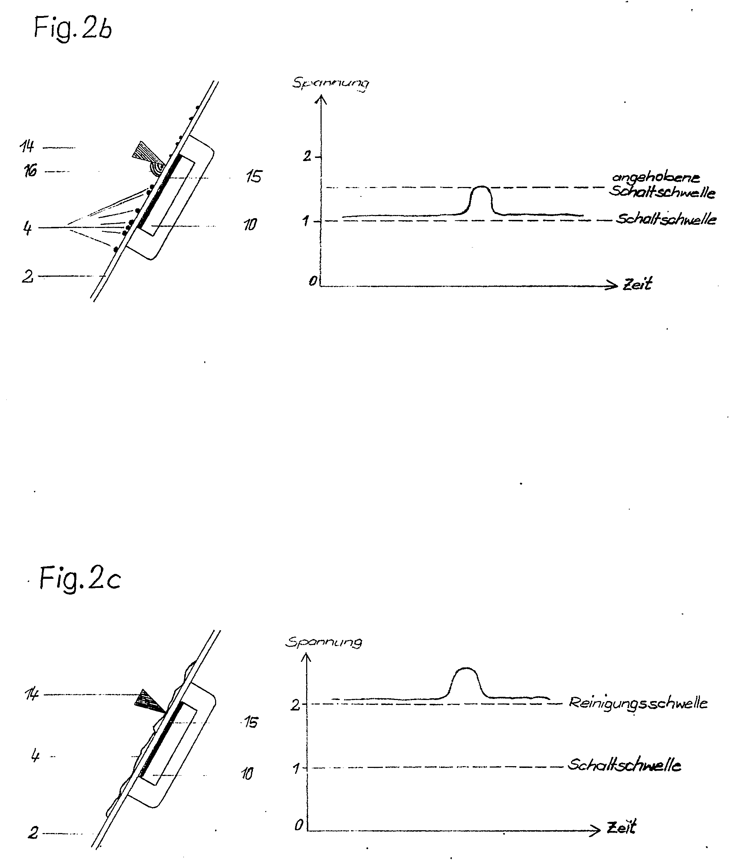

Gelangt nun Regen auf die Scheibe, wird das Licht zum Fotoempfänger geschwächt, so daß das Signal ansteigt. Nach Überschreiten der Schaltschwelle startet der Scheibenwischer und schaltet nach Unterschreitung der Schaltschwelle wieder ab (Fig. 2a). Beim Überqueren des Wischerblattes 14 über die empfindliche Fläche 15 des Sensors 10 schiebt das Wischerblatt 14 eine große Wasserwelle vor sich her, die das Licht im Sensor sehr stark schwächt, so daß ein hohes Impulssignal entsteht. Dieses hohe Signal kann mit einem elektronischen Filter vom Untergrund getrennt werden (Fig. 3). Nach Überschreiten der Impulsschwelle schaltet die Nachfolgeelektronik den Scheibenwischer wieder ab.

Befindet sich nun ein Ölfilm oder eine durch Regenwasser nicht entfernbarer Verschmutzung auf der Scheibe, so führt dies dazu, daß das Licht im Sensor so stark geschwächt wird, daß die Steuerelektronik den Scheibenwischer ständig eingeschalten läßt.(Das kontinuierliche Signal liegt dann immer über der Schaltschwelle) Fig. 3b

Beim Überqueren des Wischerblattes 14 über die empfindliche Fläche 15 des Sensors 10 schiebt das Wischerblatt nämlich keine oder nur eine kleine benetzende Schicht 16 vor sich her, so daß im Empfänger nur ein kleines Impulssignal entsteht. Auch die Lippe des Wischerblattes, die benetzenden Kontakt mit der Scheibe hat, erzeugt ein kleines Signal. Diese Signale liegen unterhalb der Impulsschwelle was die Steuerelektronik veranlaßt, die Scheibenwischer zu stoppen. Die Steuerelektronik erfaßt dabei die Wischfrequenz, so daß maximal 2 Impulssignale pro Wischvorgang gemessen werden.

In diesem Fall kann dann z.B. die Schaltschwelle für das kontinuierliche Signal in der elektr. Steuerung angehoben werden, so daß erst ein höherer durch Wasser verursachtes kontinuirliches Signal den Scheibenwischer wieder einschaltet (Fig.2b). Das durch den Ölfilm verursachte Signal wird somit unterdrückt.

Bei starker Verschmutzung der Scheibenoberfläche 2 durch wasserunlöslichen Schmutz 4 (Silicon, Insekten usw.) in Fig. 2c liegt das kontinuierliche Signal sehr hoch und das Impulssignal ist klein. Liegt das kontinuierliche Signal höher als die Reinigungsschwelle und hat das Impulssignal eine bestimmte Höhe, so wird durch die Steuerelektronik die Waschwasserpumpe betätigt und Reinigungsmittel auf die Scheibe gespritzt. Nach der Reinigung sinkt das kontinuierliche Signal wieder unter die Schaltschwelle und der Scheibenwischer wird wieder abgeschaltet. Hierzu befinden sich in der Steuerelektronik elektronische Baugruppen wie Comparatoren und logische Verknüpfungen.

Ist die Scheibenoberfläche 2 mit Eis oder Schnee bedeckt, liegt das kontinuierliche Signal hoch und das Impulssignal fehlt oder ist nur sehr klein. Der Scheibenwischer würde dann entweder auf der Scheibe festkleben oder das Wischerblatt wieder durch die rauhe Oberfäche der Scheibe zerstört werden. Mit einem Temperaturfühler 20 im Sensorgehäuse wird unterhalb des Gefrierpunktes ein Signal erzeugt, das gemeinsam mit kontinuierlichen und Impulssignal in der Steuerelektronik mit Sollwerden verglichen wird und zum Abschalten der Scheibenwischer führt.

## Ansprüche

1. Verfahren und Verrichtung zum Melden der Scheibenverschmutzung für Fahzeuge mit Scheibenreinigungsanlagen, bei dem mittels eines optischen Sensors im Fahrzeuginnern die Benetzung der Scheibe im Wischerbereich der Scheibenwischer auf der Außenseite des Fahrzeugs gemessen wird, dadurch gekennzeichnet, daß das Signal des Fotoempfängers neben der kontinuierlichen Auswertung besonders in dem kurzen Zeitraum gemessen wird, in dem das Wischerblatt des Scheibenwischers die lichtempfindliche Fläche des Sensors überquert und das gemessene impulsförmige Signal mit Sollwerten verlichen wird.

2. Verfahren nach Anspruch 1 dadurch gekennzeichnet, daß nur das impulsförmige Signal beim überqueren des Wischerblattes gemessen wird, wobei das kontinuierliche Signal durch elektronische Filter unterdrückt wird.

3. Verfahren nach Anspruch 1 oder 2 dadurch gekennzeichnet, daß die Höhe des gemessenen Signals mittels eines Comparators mit einem Solwert verglichen und bei Nichterreichen eines Solwertes der Scheibenwischer abgeschaltet wird.

4. Verfahren nach einem der Ansprüche 1 bis 3, dadurch gekennzeichnet, daß die Höhe des impulsförmigen und kontinuierlichen Signale gemessen und mit Sollwerten verglichen werden und bei zu hohem kontinuierlichem Signal und gleichzeitig zu niedrigem Impulssignal der Scheibenwischer weiterläuft und gleichzeitig Reinigungsmittel auf die verschmutzte Scheibe gespritzt wird.

5. Verfahren nach einem der Ansprüche 1 bis 3, dadurch gekennzeichnet, daß das impulsförmige Signal zur Eichung des Sensors ausgewertet wird, indem bei nicht vorhandenem oder zu kleinem Impulssignal die Schaltschwelle der Steuerelektronik für das kontinuierliche Signal automatisch angehoben wird, so daß erst ein höheres kontinuierliches Signal zum Einschalten der Scheibenwischer führt.

6. Verfahren nach einem der Ansprüche 1 bis 5, dadurch gekennzeichnet, daß der Sensor mit einem Temperaturfühler ausgestattet ist und die elektronische Steuerung bei Temperaturen unterhalb des Gefrierpunktes, wenn das impulsförmige Signal ausbleibt und das kontinuierliche Signal sehr hoch liegt, den Scheibenwischer wieder stopt.

7. Verfahren nach Anspruch 1. dadurch gekennzeichnet, daß die Differenz des kontinuierlichen Signals unmittelbar vor und nach dem Überqueren des Wischerblattes gemessen wird und je nach Unteschied der Signale durch die Steuerelektronik der Scheibenwischer und das Auftragen des Reinigungsmittels gesteuert wird.

Fig.1

## Fig. 3

Spannung

Zeit

## Fig. 2a

14
13
3
2

15
10

Spannung

Impulssignal

2

1 — — — — — — — — — Schaltschwelle

0

Zeit

kontinuierliches Signal

# Fig.2b

# Fig.2c